Europäisches Patentamt

European Patent Office

Office européen des brevets

Publication number: **0 291 056**
**A2**

# EUROPEAN PATENT APPLICATION

Application number: **88107637.6**

Date of filing: **11.05.88**

Int. Cl.4 **H01H 13/14 , B29C 45/00 ,
C08K 7/08 , C08L 23/06**

Priority: **11.05.87 JP 114979/87**

Date of publication of application:
**17.11.88 Bulletin 88/46**

Designated Contracting States:
**DE GB**

Applicant: **Otsuka Kagaku Kabushiki Kaisha
10, Bungo-machi Higashi-ku
Osaka-shi Osaka-fu(JP)**

Inventor: **Kawaguchi, Akiyoshi c/o Otsuka
Kagaku K.K.
Naruto Laboratory 649-2, Aza-hanamen
Satoura
Satoura-cho Naruto-shi Tokushima-ken(JP)**
Inventor: **Tasaka, Takeo c/o Otsuka Kagaku
K.K.
Naruto Laboratory 649-2, Aza-hanamen
Satoura
Satoura-cho Naruto-shi Tokushima-ken(JP)**
Inventor: **Hara, Masumi
14-11, Rokkakubashi 3-chome
Kanagawa-ku Yokohama-shi
Kanagawa-ken(JP)**

Representative: **Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)**

(54) Switch member having a key touch feel.

⑰ A switch member having a key touch feel which is formed by injection molding an injection moldable superhigh molecular weight polyethylene resin.

EP 0 291 056 A2

## Switch member having a key touch feel

The present invention relates to switch members for being fitted to operational parts in various instruments such as typewriters, personal computers, office computers, bank computer terminals etc., and more specifically, it relates to switch members used for high reliability full stroke keyboard switches of which operatativity such as key touch feel and operative life such as key touch durability are required.

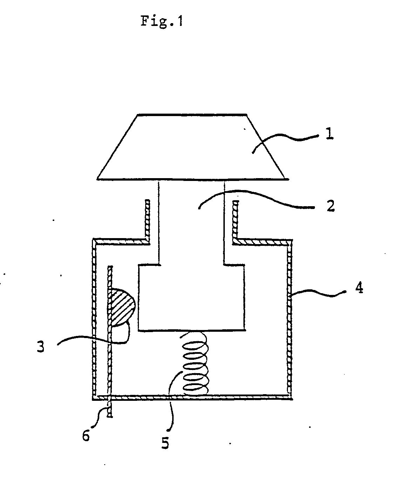

The keyboard switch of this type has heretofore been composed of, as shown in Fig. 1, a keytop (1), a stem (2) or a keytop integrated with a stem, an electrical contact part (3) such as a phosphorous bronze actuator, a conductive rubber contact, a conductive film etc., an elastic body part (5) such as a coil spring, rubber, foam, etc. and a housing (4).

Said keytop (1), stem (2) and housing (4) are usually made of various thermoplastic resins such as polyacetal (POM), polybutylene terephthalate (PBT), polyethylene terephthalate (PET), nylon (PA), polycarbonate (PC), polyphenylene oxide, ABS etc. in view of productivity, cost, functionality, etc.

In order to fully manifest the key touch feel of the key switch, it is desired that the static friction coefficient and dynamic friction coefficient between the stem (2) and the electrical contact (3) and also between the stem (2) and the housing (4) be both small, that there be no stickiness (i.e. the contact angle is great), and that the surface of the molded product be smooth. Further, from an aspect of operative life, that is, key touch durability, it is desired that the abrasion wear between the stem (2) and the electrical contact part (3) and between the stem (2) and the housing (4) be small.

In order to improve the key touch feel, there has heretofore been employed coating of a fluorine resin on the molded product surface of the stem (2) and/or the housing (4). The fluorine resin is coated on the switch member surface, i.e., the base in the form of a dispersion of fine particles of a fluorine resin such as polytetrafluoroethylene (PTFE), fluorinated ethylene-propylene copolymer (FEP), tetrafluoroethylene-perfluorovinyl ether copolymer (PFA), ethylene-tetrafluoro-ethylene copolymer (ETFE), etc. in an organic solvent or in other resin composition to serve as a binder. The fluorine resin was very low in the friction coefficients and was low in the stickiness, and further their contact angle, although depending on the film forming conditions, was about 110° to water (cf. polyamide being 50-60°) and thus their effects were very great.

However, the fluorine resin coating was expensive and was not uniform in the adhesion with the base, the coat thickness, etc. depending on the coating method and conditions, and therefore, a coating-free mode has been greatly expected.

Attempts on such coating-free mode have been made, for example, improvement of sliding movement was attempted by using PTFE, graphite, molybdenum disulfide, oil, grease, etc. in thermoplastic resins such as POM, PBT, PA, PC, etc. but under present circumstances such studies are not satisfactory.

An object of the present invention is to provide a switch member which has eliminated the use of the conventionally used fluorine resin coating but possesses a key touch feel and key touch durability comparable to or better than the conventional ones.

The above and other objects of the invention will become apparent from the following description.

The present invention provides a switch member having a key touch feel obtained by injection molding an injection moldable superhigh molecular weight polyethylene resin.

The superhigh molecular weight polyethylene used in the present invention is a crystalline resin which is an ethylene homopolymer or a copolymer mainly comprising ethylene with a small amount of other α-olefin such as propylene, 1-butene, 1-hexene, 1-octene, 4-methyl-1-pentene, etc., in which the viscosity average molecular weight calculated from the intrinsic viscosity measured in decalin solvent at 135°C is in the range of 400,000 to 1,000,000 and the melt flow rate (MFR: ASTM D 1238, F) is 1 g/10 min. or higher. That having a viscosity average molecular weight of less than 400,000 is poor in abrasion resistance, mechanical strength and heat resistance, while that of more than 1,000,000 has poor flow ability and its injection molding is difficult.

The superhigh molecular weight polyethylene resin has low friction coefficients and low stickiness and its contact angle is about 90° to water and thus is comparable in effect to the fluorine resin coating.

In the present invention, where the above-described superhigh molecular weight polyethylene resin further contains a potassium titanate fiber, a switch member even improved in aspects of abrasion resistance, strength, rigidity, heat resistance, dimentional stability, etc. is obtained. In this case, when other reinforcing material, for example, glass fiber, talc, mica, etc. is incorporated, the surface properties of the resin are deteriorated, the member to be slided therewith is abraded, and hence the generated abraded powder then causes a failure in circuit operation, and increases the friction coefficient, resulting in a poor key touch feel, and therefore it is not preferred.

The potassium titanate fiber used in the present invention is a monocrystalline fiber represented by the formula:

$K_2O \cdot nTiO_2\text{-}x$

wherein n is an integer of 2 to 12 and x is zero or a decimal not greater than 1, and that having an average fiber diameter of about 0.1 to 2 $\mu$m, an average fiber length of about 5 to 100$\mu$m and an aspect ratio (average fiber length/average fiber diameter) of about 10 to 100 is preferred, and is effective as a reinforcing agent for the superhigh molecular weight polyethylene. Inter alia, potassium hexatitanate wherein n is 6 and x is zero is most suitable because it is excellent in both chemical resistance and reinforcing force.

Further, a surface conductive whisker which is made of this potassium titanate fiber plated with nickel, silver (electroless plating), etc. may also be used, or a blue to black conductive whisker of $K_2O \cdot nTiO_2\text{-}y$ wherein y is a decimal not greater than 1 especially where y = 0.1 to 0.5 due to lattice defect obtained by calcining $K_2O \cdot nTiO_2$ in a reducing atmosphere may be applied. Here, if y exceeds 1, the original fiber form is lost, and the reinforcing effect can hardly be expected.

Although these potassium titanate fibers satisfactorily exhibit a reinforcing effect even without conducting surface treatment, mechanical properties and, in some cases, fabricability are improved if conducting surface treatment by using a titanate type coupling agent, a silane type coupling agent, etc. The amount of the potassium titanate fiber added is suitably 1 to 40% by weight based on the total composition, because if it is less than 1% by weight, the reinforcement of the resin is not enough while if it exceeds 40% by weight, it is not preferred in view of the friction and abrasion characteristics.

Fig. 1 is an explanatory figure of a keyboard switch.

(1) key top, (2) stem, (3) electrical contact, (4) housing, (5) elastic body part, and (6) terminal.

The switch member of the present invention is used as a member for a stem (2) of a key switch which comprises a keytop (1) which transfers the press down force downward, a stem (2) which is integrated with and/or connected with said keytop, an electrical contact and a housing (4) which guides and contains said stem.

Further, as the constituting members for the aforesaid keyboard, a combination of a superhigh molecular weight polyethylene resin composition as the stem (2) and a PBT resin composition containing PBT, a potassium titanate fiber and a high density polyethylene (HDPE) as the housing (4) is most effective.

The PBT used in the present invention is a thermoplastic engineering resin obtained by polycondensation of dimethyl terephthalate or terephthalic acid and 1,4-butanediol. The HDPE used in the present invention is that obtained by polymerization of ethylene and having a density of about 0.94 g/cm$^3$ or more, but it may also be a copolymer with a small amount of an $\alpha$-olefin copolymerizable with ethylene such as propylene, butene, pentene, styrene etc. The above-described HDPE is suitably that having an average particle diameter of 200$\mu$m or less and a molecular weight of 50,000 to 300,000. In the PBT resin composition, the amounts of the potassium titanate fiber and HDPE incorporated are suitably such that the potassium titanate fiber is 5 to 40% by weight and HDPE is 2 to 10% by weight based on the total composition. The member of the present invention may be produced by various processes. As one example, the resin components with the potassium titanate fiber and HDPE may be preblended, pelletized by extruding through an extruder, and thereafter molded by an injection molding machine. In addition, the superhigh molecular weight polyethylene resin composition of the present invention may contain a heat resistant stabilizer, weather resistant stabilizer, coloring agent, flame retardant, antistatic agent, PTFE, HDPE, etc. according to the purpose in amounts which do not interfere with the object of the present invention.

The present invention will be described in more detail by the following examples and comparative examples.

Examples 1 to 6 and Comparative Examples 1 to 6

Using pellets having an average molecular weight of 800,000 and an MFR (ASTM D 1228, F) of 12g/10 min. (produced by Mitsui Petrochemical Industries Ltd., LUB MER L 025) as a superhigh molecular weight polyethylene resin or those further containing a potassium titanate fiber in the amount set forth in Table 1, Compositions A to C were obtained, extruded through an extruder and injection molded to prepare specimens.

Further, Composition D obtained by adding a potassium titanate fiber and a HDPE powder (Mitsui Petrochemical Industries Ltd., Hizex 3300 FP) to PBT (Polyplastics Co., Ltd., Duranex 2002) in the proportion shown in Table 1 was extruded through an extruder and injection molded to prepare a specimen.

They were measured for the static friction coefficient, dynamic friction coefficient, specific abrasion wear, bending strength, bending modulus, heat distortion temperature and molding shrinkage rate. The results are given in Tables 1 to 3.

The static friction coefficient was measured according to ASTM D 1984 by using a vertical load of 50g and a moving speed of 50 mm/min. and the dynamic friction coefficient and specific abrasion wear were measured by using an applied pressure of 3.5 kg/cm², a sliding linear speed of 30 cm/sec. and a running distance of 10 km where the object to be slided with is gold-plated phosphorus bronze or by using an applied pressure of 0.6 kg/cm², a sliding linear speed of 30 cm/sec. and a running distance of 10 km where the object to be slided with is a resin composition.

The bending strength and bending modulus were measured according to ASTM D 790, the heat distortion temperature was measured according to ASTM D 648 by using a load of 4.6 kg/cm² or 18.5 kg/cm², and the molding shrinkage rate was measured on a tensile test specimen in the flowing direction according to ASTM D 638.

On the other hand, similar measurement was conducted on resin compositions E and F set forth in Table 1 and also on those with fluorine resin coating, and the results are also shown therewith.

## Table 1

| Composition (wt.%) and properties | A | B | C | D | E | F |
|---|---|---|---|---|---|---|
| Superhigh molecular weight polyethylene | 100 | 90 | 70 | | | |
| Potassium titanate fiber | | 10 | 30 | 15 | | 15 |
| PBT | | | | 80 | | 85 |
| Polyacetal resin | | | | | 90 | |
| HDPE | | | | 5 | | |
| PTFE | | | | | 10 | |
| Bending strength (kg/cm²) | 250 | 330 | 450 | 1,210 | 730 | 1,300 |
| Bending modulus (kg/cm²) | 11,000 | 20,000 | 39,000 | 51,000 | 22,000 | 56,000 |
| Heat distortion temp. (°C) | | | | | | |
| 4.6 kg/cm² | 96 | 102 | 112 | — | — | — |
| 18.5 kg/cm² | — | — | 69 | 150 | 105 | 154 |
| Molding shrinkage rate (%) | 3.0 | 2.6 | 1.7 | 1.0 | 2.3 | 0.9 |

## Table 2

(Abrasion test result using phosphorus bronze)

| | Composition No. | Static friction coefficient | Dynamic friction coefficient | Specific abrasion wear (mm³/kg·km) | |
|---|---|---|---|---|---|
| | | | | Resin | Phosphorus bronze |
| Ex. 1 | A | 0.21 | 0.19 | 0.015 | $1.4 \times 10^{-4}$ |
| 2 | B | 0.21 | 0.20 | 0.0055 | $1.6 \times 10^{-4}$ |
| 3 | C | 0.22 | 0.21 | 0.0032 | $1.2 \times 10^{-4}$ |
| Com.Ex. 1 | E | 0.42 | 0.28 | 0.0077 | $1.0 \times 10^{-4}$ |
| 2 | F | 0.65 | 0.36 | 0.028 | $3.1 \times 10^{-4}$ |
| 3 | Fluorine E coating | 0.19 | 0.22 | 0.014 | $1.1 \times 10^{-4}$ |
| 4 | Fluorine F coating | 0.24 | 0.24 | 0.036 | $3.1 \times 10^{-4}$ |

## Table 3

(Abrasion test result using resin)

| | Composition No. | | Static friction coefficient | Dynamic friction coefficient | Specific abrasion wear (mm³/kg·km) | |
|---|---|---|---|---|---|---|
| | (1) | (2) | | | (1) | (2) |
| Ex. 4 | A | D | 0.25 | 0.19 | 0.031 | 0.024 |
| 5 | B | D | 0.24 | 0.14 | 0.022 | 0.016 |
| 6 | C | D | 0.21 | 0.11 | 0.011 | 0.012 |
| Com.Ex. 5 | E | F | 0.37 | 0.44 | 0.078 | 0.024 |
| 6 | E (coat) | F (coat) | 0.24 | 0.17 | 0.17 | 0.022 |

As evident from the results of the friction and abrasion against the phosphorus bronze and resin in Table 1 to 3, the use of the members of the present invention gives static friction coefficients and dynamic friction coefficients comparable to those of the fluorine coating of Comparative Examples 3 to 6, and also gives lesser specific abrasion wear.

Examples 7 and 8 Comparative Examples 7 and 8

In the keyboard switch shown in Fig. 1, Compositions A and C of the present invention were used as the material for the stem, and Composition D was used as the material for housing, and by injection molding, members were produced. Said members were incorporated in keyboard switches, and a key touch test was conducted at a speed of 5 Hz 20,000,000 times, the results of which are given in Table 4. On the other hand, as Comparative Examples, E and F were used as the stem and the housing respectively, and fluorine coating was conducted; their results are also shown.

## Table 4 (key touch test)

|  | Ex. 7 | Ex. 8 | Com. Ex. 7 | Com. Ex. 8 |
|---|---|---|---|---|
| Stem | A | C | E | E (coat) |
| Housing | D | D | F | F (coat) |
| Before test | ◎ | ◎ | △ | ◎ |
| One million times | ◎ | ◎ | △ | ◎ |
| Three million times | ◎ | ◎ | × | ◎ |
| Five million times | ○ | ◎ | × | ○ |
| Ten million times | △ | ○ | — | △ |
| Twenty million times | × | △ | — | × |

Judgement    ◎: Absolutely no scratches

○: No scratches

△: Slight scratches

×: Scratches

As can be seen from Table 4, the member without fluorine coating in Comparative Example 7 was inferior in initial feel and also has a problem with durability, but the members of the present invention are superior in both initial feel and durability. Further, Example 8 is superior to Comparative Example 8 in durability.

By using the key switches of the present invention, not only a key touch feel comparable to that obtained by the conventionally employed fluorine coating may be obtained but also the key touch life durability is reliable because the fluorine resin coated layer starts to peel off and causes a problem with feel when the key touch frequency exceeds 5 million times.

## Claims

1. A switch member having a key touch feel which is formed by injection molding an injection moldable superhigh molecular weight polyethylene resin.

2. A switch member having a key touch feel which is formed by injection molding a molding material containing 1 to 40% by weight of the total composition of a potassium titanate fiber in an injection moldable superhigh molecular weight polyethylene resin.

3. A key switch which comprises a keytop (1) which transfers a press down force downward, a stem (2) integrated with and/or connected with said keytop, an electrical contact (3) and a housing (4) which guides and contains said stem, said key switch having a key touch feel and utilizing the switch member according to Claim 1 or 2 as the stem.

4. The key switch according to Claim 3 which utilizes a housing (4) obtained by injection molding a polybutylene terephthalate resin composition which contains a potassium titanate fiber and a high density polyethylene in a polybutylene terephthalate resin.

Fig.1